(19) Europäisches Patentamt / European Patent Office / Office européen des brevets

(11) **EP 1 965 955 B1**

(12) **EUROPÄISCHE PATENTSCHRIFT**

(45) Veröffentlichungstag und Bekanntmachung des Hinweises auf die Patenterteilung:
**07.11.2018 Patentblatt 2018/45**

(51) Int Cl.:
***B25J 9/16*** *(2006.01)*

(21) Anmeldenummer: **06818547.9**

(22) Anmeldetag: **15.11.2006**

(86) Internationale Anmeldenummer:
**PCT/EP2006/010945**

(87) Internationale Veröffentlichungsnummer:
**WO 2007/079812 (19.07.2007 Gazette 2007/29)**

(54) **SYSTEM UND VERFAHREN ZUR AUSRICHTUNGS- UND LAGEKONTROLLE EINES ROBOTERWERKZEUGS**

SYSTEM AND METHOD FOR ALIGNING AND FOR CONTROLLING THE POSITION OF A ROBOT TOOL

SYSTÈME ET PROCÉDÉ POUR CONTRÔLER L'ORIENTATION ET LA POSITION D'UN OUTIL DE ROBOT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.12.2005 DE 102005061618**

(43) Veröffentlichungstag der Anmeldung:
**10.09.2008 Patentblatt 2008/37**

(73) Patentinhaber: **ABB AG**
**68309 Mannheim (DE)**

(72) Erfinder: **KOCK, Sönke**
**S-724 63 Västeras (SE)**

(56) Entgegenhaltungen:
**EP-A2- 1 591 209      WO-A1-01/76830**
**DE-A1- 10 163 392      JP-A- 4 057 691**
**US-A- 5 093 552**

**Beschreibung**

Die Erfindung betrifft ein System sowie ein Verfahren zur Ausrichtungskontrolle eines Roboterwerkzeugs.

Industriell eingesetzte Roboter tragen in aller Regel Werkzeuge, wobei es sich sowohl um Prozesswerkzeuge für Bearbeitungs- oder Montagearbeiten, beispielsweise Werkzeuge zum Polieren, Fräsen, Schweißen, Trennen, Lackieren, Kleben, wie insbesondere Schweißzangen oder -pistolen (weld guns), Lackierpistolen, Klebepistolen oder auch Schneidbrenner, als auch um Greifwerkzeuge handeln kann, um vorbestimmte Aufgaben unter Programmsteuerung durch- beziehungsweise auszuführen, Ein solcher Roboter ist in Dokument US 5,093,552 offenbart.

Da einige dieser Werkzeuge oder Hilfsmittel im täglichen Gebrauch ein hohes Gefährdungspotential für Mensch und Material in sich tragen, insbesondere durch Emission gefährlicher beziehungsweise gefährdender Mittel oder Medien, wie beispielsweise ein Laserstrahl oder ein Hochdruck-Wasserstrahl, sind im Umgang mit derartigen Werkzeugen besondere sicherheitsrelevante Aspekte und Fragestellungen zu beachten und entsprechende Maßnahmen zur Gefahren- und/oder Schadensminimierung vorzusehen. Dies gilt insbesondere bei Bewegungen des Roboters mit aktiviertem Werkzeug, beispielsweise bei Annäherung des Roboterwerkzeugs an ein zu bearbeitendes Werkstück.

Auch werden bei bekannten Roboteranordnungen, um Menschen und Material vor fehlerhaften Lagen und/oder Ausrichtungen und/oder Bewegungen des aktivierten Roboterwerkzeuges zu schützen, welche beispielsweise zu einer unkontrollierten Abtastung der Arbeitsumgebung des Roboters mit dem jeweiligen Medium führen können und damit erheblichen Schaden verursachen können, Einfassungen oder Umbauungen der jeweiligen Roboterzelle beziehungsweise des Roboters erforderlich, welche der Energie der Mittel des Roboterwerkzeugs während einer bestimmten Zeit widerstehen können beziehungsweise deren Energie für eine bestimmte Zeit aufnehmen können. Diese Einfassungen oder Umbauungen bedeuten jedoch einen zusätzlichen technischen sowie finanziellen Aufwand und bilden einen wesentlichen Kostenfaktor bei der Installation von Robotern, insbesondere von Industrierobotern.

Daran angelehnt liegt der Erfindung die Aufgabe zugrunde den Installationsaufwand eines Roboters, insbesondere eines Industrieroboters zu minimieren und eine Möglichkeit anzugeben die Orientierung und/oder Ausrichtung eines Roboterwerkzeugs effizient zu kontrollieren.

Diese Aufgabe wird durch das erfindungsgemäße Verfahren zur Ausrichtungs- und Lagekontrolle eines Roboterwerkzeugs mit den Merkmalen des Anspruch 1 gelöst.

Ein System zur Ausführung des erfindungsgemäßen Verfahrens sowie vorteilhafte Ausgestaltungen und Weiterbildungen der Erfindung sind in weiteren Ansprüchen und der nachfolgenden Beschreibung angegeben.

Beim erfindungsgemäßen Verfahren zur Ausrichtungs- und Lagekontrolle eines Roboterwerkzeugs wird unter Berücksichtigung wenigstens einer Referenzrichtung des Roboterwerkzeugs, sowie wenigstens eines vorgebbaren Toleranzwinkels, welcher einen Toleranzbereich, insbesondere einen sich von einem vorbestimmten Ursprung aufweitenden Toleranzbereich, um die wenigstens eine Referenzrichtung des Roboterwerkzeuges aufspannt, mittels Messwerterfassung und -verarbeitung automatisiert die Ausrichtung des Roboterwerkzeuges ermittelt und mit der Referenzrichtung und/oder den durch den, insbesondere kegelförmigen, Toleranzbereich vorgegebenen Toleranzwerten verglichen und bei Verlassen des wenigstens einen Toleranzbereichs eine Abschaltung und/oder Deaktivierung des jeweiligen Roboterwerkzeugs bewirkt.

In vorteilhafter Ausbildung des Verfahrens wird ein kegelförmiger Toleranzbereich um die wenigstens eine Referenzrichtung des Roboterwerkzeugs aufgespannt. Grundsätzlich sind je nach gewähltem Koordinatensystem aber auch andere Geometrien des wenigstens einen sich aufweitenden Toleranzbereichs möglich, wie beispielsweise bei der Verwendung von Eulerwinkel oder Quaternionen zur Beschreibung der Roboterbewegung, oder bei Verwendung von RPY (Roll Pitch Yaw)-Winkel, welche sich von den Eulerwinkeln insbesondere durch die Wahl der Drehachsen unterscheiden. So kann beispielsweise auch wenigstens ein kegelartiger Toleranzbereich mit elliptischer Grundfläche aufgespannt sein.

Durch die Berücksichtigung individueller Toleranzbereiche für jede Referenzrichtung des Roboterwerkzeugs wird somit ein frühzeitiges, unnötiges Deaktivieren des Roboterwerkzeuges vermieden und eine effiziente Kontrolle der Werkzeugausrichtung ermöglicht.

Bei einer vorteilhaften Weiterbildung des Verfahrens wird bei Verlassen des wenigstens einen Toleranzbereiches nicht nur das entsprechende Roboterwerkzeug abgeschaltet und/oder deaktiviert, sondern vermittels eines geeigneten Steuersignals an den Kontroller des Roboters auch die Bewegung des Roboters gestoppt.

Insbesondere verläuft die Referenzrichtung des Roboterwerkzeuges entlang einer Koordinatenachse, beispielsweise der Z-Achse, eines vorbestimmbaren festen Bezugs- und/oder Referenzraums des Roboterarbeitsbereiches, welchem ein vorzugsweise kartesisches Koordinatensystem mit entsprechendem Ursprung zugeordnet ist. Dieses Koordinatensystem entspricht vorzugsweise dem sog. Weltkoordinatensystem. Insbesondere spannt das kartesische Koordinatensystem dabei einen 3-dim Vektorraum auf.

In einer vorteilhaften Ausgestaltung des Verfahrens wird die Ausrichtungs- und/oder Lagebestimmung des Roboterwerkzeugs mittels Erfassung und Verarbeitung von Messwerten bezüglich der Roboterachsen- und/oder Motorpositionen des Roboters durchgeführt.

In einer weiteren vorteilhaften Ausgestaltung des Verfahrens wird nicht nur die Ausrichtung oder Lage des jeweiligen Werkzeuges und/oder Hilfsmittels ermittelt, sondern auch dessen Position bestimmt.

In einer vorteilhaften Weiterbildung des Verfahrens wird zusätzlich eine Warnmeldung generiert und zum Roboterkontroll- und/oder -steuerpult und/oder zu einem optischen und/oder akustischen Signalgeber, beispielsweise eine Warnlampe, Signallampe, Sirene, Horn, Lautsprecher, übermittelt wenn die Lage und/oder Ausrichtung des Roboterwerkzeuges innerhalb des Toleranzbereiches um einen vorbestimmten Prozentanteil von der Referenzrichtung abweicht.

In einer weiteren vorteilhaften Ausgestaltung des Verfahrens werden wenigstens zwei Referenzrichtungen mit je einem Toleranzwinkel vorgegeben, wobei die Abschaltung des jeweiligen Hilfsmittels und/oder Werkzeugs bei Verlassen beziehungsweise Überschreiten auch nur eines durch den Toleranzwinkel aufgespannten Toleranzbereiches erfolgt. So kann beispielsweise eine zweite Werkzeugreferenzrichtung, wie die X-Richtung des festen Bezugssystems, gemeinsam mit einem zweiten Toleranzwinkel, der beispielsweise einen zweiten Kegel aufspannt, angegeben und berücksichtigt werden.

In einer weiteren Ausgestaltung des Verfahrens ist vorgesehen den Arbeitsbereich des Roboters in wenigstens zwei Teilarbeitsbereiche mit jeweils wenigstens einer Referenzrichtung mit Toleranzwinkel zu untergliedern, wodurch eine verfahrensgemäße Berücksichtigung auch mehrerer lokal verteilter, unterschiedlicher Referenzrichtungen und/oder Toleranzwinkel, wie beispielsweise bei einer komplexen Werkstückgeometrie erforderlich, ermöglicht wird. Demgemäß werden verschieden erforderliche Werkzeugorientierungen beziehungsweise -ausrichtungen oder -lagen den jeweiligen Teilarbeitsbereichen des Roboters zugeordnet.

Verfahrensgemäß werden dann automatisiert die passenden oder geeigneten Referenzrichtungen bzw. Referenzen und/oder Toleranzen in Abhängigkeit der Position des Roboters beziehungsweise des Roboterwerkzeugs in Relation zum jeweiligen Teilarbeitsbereich und damit ortsabhängig bzw. ortsaufgelöst selektiert.

In einer weiteren vorteilhaften Ausgestaltung des Verfahrens sind die Referenz- und/oder Toleranzwerte durch externe und/oder interne Kontrolleinrichtungen und/oder Eingaben änderbar und/oder vorgebbar.

In einer vorteilhaften Weiterbildung des Verfahrens werden die Ausrichtungsfehler des Roboterwerkzeugs und/oder -hilfsmittels in Bezug auf die jeweilige Referenzrichtung ermittelt, indem das Skalarprodukt des Werkzeug-z-Vektors in Referenzkoordinaten mit dem Werkzeug-z-Referenzvektor in Referenzkoordinaten, und/oder das Skalarprodukt des Werkzeug-x-Vektors in Referenzkoordinaten mit dem Werkzeug-x-Referenzvektor in Referenzkoordinaten gebildet werden. Dabei ist festzustellen, dass jedem Werkzeug ein bewegliches, vorzugsweise kartesisches oder rechtwinkliges Koordinatensystem mit den drei Koordinatenachsen x,y,z bzw. diesen entsprechenden, die Richtung angebenden Vektoren x,y,z zugeordnet ist, welches der Bewegung bzw. Ausrichtung des Roboterwerkzeugs folgt und diese, in Relation zum Referenzkoordinatensystem, beschreibt. Vorzugsweise werden dabei alle Vektoren als Einheitsvektoren angegeben und/oder über ihren Betrag entsprechend normiert.

Das Skalarprodukt zweier Einheitsvektoren ergibt den Cosinus des kleinsten eingeschlossenen Winkels zwischen beiden Vektoren, der dem halben Öffnungswinkel des Kegels entspricht, der gebildet wird, wenn der der aktuellen Ausrichtung entsprechende Vektor um den Vektor der vorgegebenen Referenzrichtung rotiert und/oder präzessiert.

Verfahrensgemäß werden somit bei jeweils abrufbar gespeichertem Cosinus des Winkels zwischen Referenzvektor und entsprechendem Toleranzvektor und/oder bei abrufbar gespeichertem Cosinus des halben Öffnungswinkels des kegelförmigen Toleranzbereichs keine weiteren zeitaufwendigen trigonometrischen Operationen und/oder Berechnungen erforderlich.

In einer alternativen Ausgestaltung der Erfindung erfolgt die Angabe der Werkzeugausrichtung beziehungsweise -lage in Quaternionen, wobei es sich bei Quaternionen um eine vierdimensionale Divisionsalgebra über dem Körper der reellen Zahlen mit einer nicht kommutativen Multiplikation handelt. Als vierdimensionale reelle Algebra bilden die Quaternionen einen vierdimensionalen reellen Vektorraum. Demgemäß ist jedes Quaternion durch vier reelle Komponenten $x_0, x_1, x_2, x_3$ eindeutig bestimmt. Als Basiselemente dieses Vektorraums werden vier Elemente mit der Länge 1 gewählt, die senkrecht aufeinander stehen; sie werden mit $1, i, j, k$ bezeichnet. Die Linearkombination der vier Komponenten mit den vier Basiselementen lautet demgemäß

$$x_0 + x_1 i + x_2 j + x_3 k$$

Dabei ist $\mathbb{R}$ eingebettet als Elemente der Form $x_0$, also mit $x_1 = x_2 = x_3 = 0$.

Dementsprechend werden die Quaternionen zunächst in Einheitsvektoren konvertiert und dann, wie vorstehend erläutert, entsprechend weiterverarbeitet.

In einer vorteilhaften Weiterbildung der Erfindung ergeht eine Rückmeldung falls es sich bei den angegebenen und/oder konvertierten Vektoren nicht um Einheitsvektoren, handelt und/oder der angegebene Z-Vektor nicht senkrecht zum x-Vektor steht.

Weitere Möglichkeiten die Werkzeugreferenzrichtungen anzugeben bedienen sich beispielsweise Lehrmethoden (teaching methods), Offline Programmierung und/oder virtueller Realitäten.

Das erfindungsgemäße System zur Ausrichtungs- und Lagekontrolle eines Roboterwerkzeugs umfasst eine Überwachungseinrichtung mit einer Messwerterfassungseinheit und einer Verarbeitungseinheit, wobei die Überwachungseinrichtung über wenigstens eine Schnittstelle mit der Kontrolleinrichtung des Roboters zusammenwirkt und unter Berücksichtigung wenigstens einer vorgebbaren Referenzrichtung des Roboterwerkzeugs, sowie wenigstens eines vorgebbaren Toleranzwinkels, welcher insbesondere einen kegelförmigen Toleranzbereich um die wenigstens eine Referenzrichtung des Roboterwerkzeuges aufspannt, mittels der Messwerterfassungseinheit anhand erfasster Messdaten automatisiert die Ausrichtung des Roboterwerkzeuges ermittelt und die Verarbeitungseinheit die ermittelte Ausrichtung mit der Referenzrichtung und/oder den durch den insbesondere kegelförmigen Toleranzbereich vorgegebenen Toleranzwerten vergleicht und bei Verlassen des wenigstens einen Toleranzbereichs im Zusammenwirken mit der Kontrolleinrichtung des Roboters eine Abschaltung und/oder Deaktivierung des jeweiligen Roboterwerkzeugs bewirkt.

Die weitere Darlegung der Erfindung sowie vorteilhafter Ausgestaltungen erfolgt anhand einiger Figuren und Ausführungsbeispiele.

Es zeigen

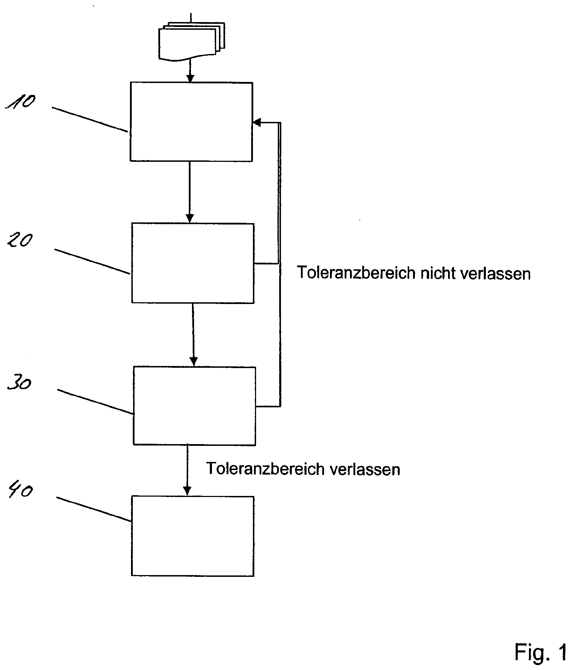

Fig. 1 beispielhaft ausgebildeter Verfahrensablauf zur Ausrichtungs- und Lagekontrolle eines Roboterwerkzeugs,

Fig. 2 beispielhafter Roboter mit Werkzeug und zwei Referenzrichtungen mit je einem Toleranzwinkel,

Fig. 3 beispielhafter Roboter mit Werkzeug mit untergliedertem Arbeitsbereich in zwei Teilarbeitsbereiche mit je zwei vorgegebenen Referenzrichtungen,

Fig. 4 beispielhaftes Berechnungsschema zur Bestimmung von Ausrichtungsfehlern,

Fig. 5 beispielhaftes Berechnungsschema zur Bestimmung von Ausrichtungsfehlern gemäß Fig. 4, jedoch unter Verwendung von Quaternionen,

Fig. 6 beispielhaft ausgebildetes System zur Ausrichtungs- und Lagekontrolle eines Roboterwerkzeugs,

Fig. 7 beispielhafte Eingabemöglichkeit.

In Fig . 1 ist ein beispielhaft ausgebildeter Verfahrensablauf zur Ausrichtungs- und Lagekontrolle eines Roboterwerkzeugs gezeigt, wobei unter Berücksichtigung verfahrensvorbereitend erfasster Referenzrichtungen des Roboterwerkzeugs, sowie vorgegebener Toleranzwinkel, welche jeweils einen kegelförmigen Toleranzbereich um die entsprechende Referenzrichtung des Roboterwerkzeugs aufspannen, in einem ersten Verfahrensschritt 10 automatisiert die Ausrichtung des Roboterwerkzeuges sowie dessen Position anhand erfasster Messwerte bezüglich der Roboterachsen- und/oder Motorpositionen des Roboters ermittelt werden.

Die Referenzrichtung des Roboterwerkzeuges verläuft dabei vorzugsweise entlang einer Koordinatenachse, eines vorbestimmbaren festen Bezugs- und/oder Referenzraums des Roboterarbeitsbereiches. Dem festen Referenzraum wird dabei ein kartesisches Koordinatensystem zugrunde gelegt welches einen 3-dim Vektorraum aufspannt.

In einem zweiten Verfahrensschritt 20 wird die ermittelte Ausrichtung mit der jeweilig vorbestimmten Referenzrichtung und/oder mit den durch den kegelförmigen Toleranzbereich vorgegebenen Toleranzwerten verglichen.

Dabei werden Ausrichtungsfehler und/oder -abweichungen des Roboterwerkzeugs in Bezug auf die jeweilige Referenzrichtung vorzugsweise dahingehend ermittelt, dass das Skalarprodukt des Werkzeug-z-Vektors in Referenzkoordinaten mit dem Werkzeug-z-Referenzvektor in Referenzkoordinaten, und/oder das Skalarprodukt des Werkzeug-x-Vektors in Referenzkoordinaten mit dem Werkzeug-x-Referenzvektor in Referenzkoordinaten gebildet werden. Dabei dem Werkzeug ein bewegliches, kartesisches oder rechtwinkliges Koordinatensystem mit den drei Koordinatenachsen x,y,z bzw. diesen entsprechenden, die Richtung angebenden Vektoren X,Y,Z zugeordnet, welches der Bewegung bzw. Ausrichtung des Roboterwerkzeugs folgt und diese, in Relation zum Referenzkoordinatensystem X,Y,Z, beschreibt. Vorzugsweise werden dabei alle Vektoren als Einheitsvektoren angegeben und/oder über ihren Betrag entsprechend normiert. Das Skalarprodukt zweier Einheitsvektoren ergibt den Cosinus des kleinsten eingeschlossenen Winkels zwischen beiden Vektoren, der dem halben Öffnungswinkel des Kegels entspricht, der gebildet wird, wenn der der aktuellen Ausrichtung entsprechende Vektor um den Vektor der vorgegebenen Referenzrichtung rotiert und/oder präzessiert.

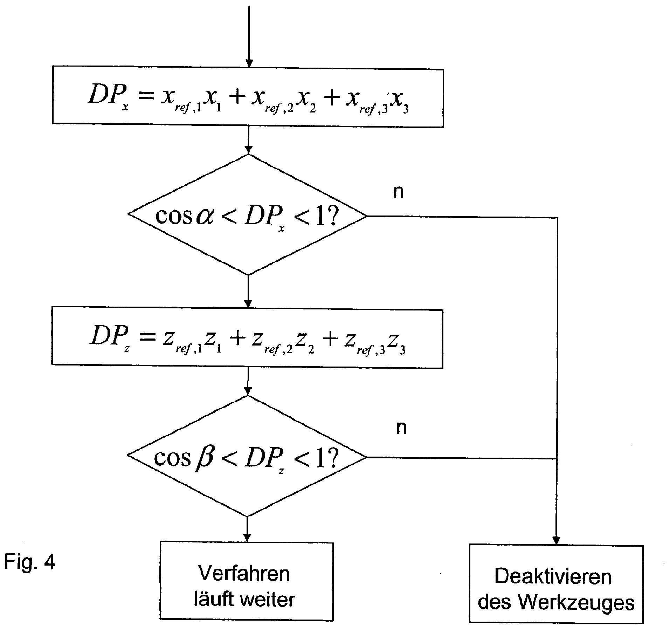

Vorteilhaft ist der Cosinus des Winkels zwischen Referenzvektor und entsprechendem Toleranzvektor und/oder der Cosinus des halben Öffnungswinkels des kegelförmigen Toleranzbereichs in einem Zwischenschritt ermittel- und speicherbar, so dass er im Laufe des Verfahrens jederzeit abgerufen werden kann und demgemäß keine weiteren zeitaufwendigen trigonometrischen Operationen und/oder Berechnungen erforderlich werden. Ein entsprechendes Berechnungsschema mit Abfrage ist in Fig. 4 angegeben.

In einem dritten Verfahrensschritt 30 wird eine Warnmeldung generiert und zu einer Roboterkontrolleinrichtung und/oder -und/oder zu einem optischen und/oder akustischen Signalgeber, insbesondere eine Warnlampe, Signallampe, Sirene, Horn, oder Lautsprecher, übermittelt, wenn die Lage und/oder Ausrichtung des Roboterwerkzeugs innerhalb des Toleranzbereiches um einen vorbestimmten Prozentanteil von der jeweiligen Referenzrichtung abweicht.

Wird wenigstens ein Toleranzbereichs verlassen, so wird in einem vierten Schritt 40 im Zusammenwirken mit der Kontrolleinrichtung des Roboters eine Abschaltung und Deaktivierung des jeweiligen Roboterwerkzeugs sowie des Roboters durchgeführt.

Die verfahrensvorbereitend erfassten Referenz- und/oder Toleranzwerte sind dabei vermittels externer und/oder interner Kontrolleinrichtungen und/oder Eingaben änderbar.

Der erste und zweite Verfahrensschritt können dabei zyklisch kontinuierlich oder zyklisch in diskreten Zeitabständen durchgeführt werden.

Das Verfahren endet wenn ein Toleranzbereich verlassen und das Roboterwerkzeug deaktiviert wird und/oder das Verfahren manuell unterbrochen beziehungsweise beendet wird.

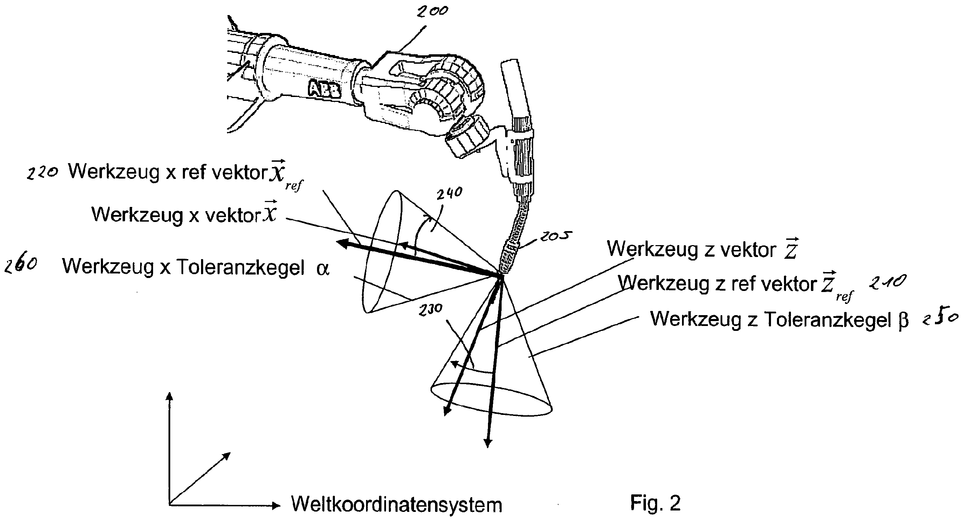

In Fig. 2 ist ein beispielhafter Roboter 200 mit Werkzeug 205 und zwei vorgegebenen Referenzrichtungen 210, 220 mit je einem Toleranzwinkel 230, 240 gezeigt, wobei die Abschaltung des jeweiligen Roboterwerkzeugs 205 und/oder Roboters 200 bei Verlassen und/oder Überschreiten auch nur eines durch einen Toleranzwinkel 230, 240 aufgespannten Toleranzbereiches 250, 260 durchgeführt wird.

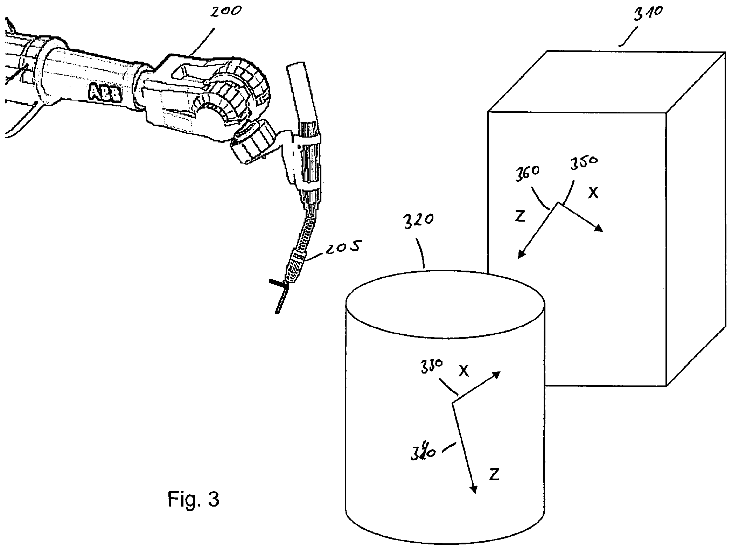

In Fig. 3 ist beispielhaft ausgeführt, dass der Arbeitsbereich des Roboters 200 verfahrensgemäß in auch in zwei oder mehr Teilarbeitsbereiche 310, 320 mit jeweils wenigstens einer Referenzrichtung 330, 340, 350, 360 untergliedert werden kann, wobei dann mehrere lokal verteilte, unterschiedliche Referenzrichtungen 330, 350 und/oder Toleranzwinkel berücksichtigt werden können, so dass den jeweiligen Teilarbeitsbereichen 310, 320 des Roboters 200 verschieden erforderliche Werkzeugorientierungen und/oder -ausrichtungen und/oder -lagen zugeordnet werden können. Bei einer derartigen Aufteilung werden automatisch die passenden oder geeigneten Referenzrichtungen 330, 340, 350, 360 und/oder Referenzen und/oder Toleranzen in Abhängigkeit der Position des Roboters 200 und/oder des Roboterwerkzeugs 205 in Relation zum jeweiligen Teilarbeitsbereich 310, 320 und damit ortsabhängig und/oder ortsaufgelöst selektiert.

In Fig. 4 ist ein Berechnungsschema zur Bestimmung des Skalarproduktes $DP_z$ des Werkzeug-z-Vektors in Referenzkoordinaten mit dem Werkzeug-z-Referenzvektor in Referenzkoordinaten, und des Skalarproduktes $DP_x$ des Werkzeug-x-Vektors in Referenzkoordinaten mit dem Werkzeug-x-Referenzvektor in Referenzkoordinaten angegeben. Beide Skalarprodukte werden nacheinander mit dem Cosinus des entsprechenden halben Kegelöffnungswinkel $\alpha$, $\beta$ verglichen. Befindet sich das Skalarprodukt innerhalb des jeweiligen Bereiches, so liegt die Ausrichtung des Werkzeuges innerhalb der zulässigen Toleranzen. Liegt auch nur ein Skalarprodukt außerhalb des entsprechenden Bereiches, so folgt die Deaktivierung des Werkzeuges.

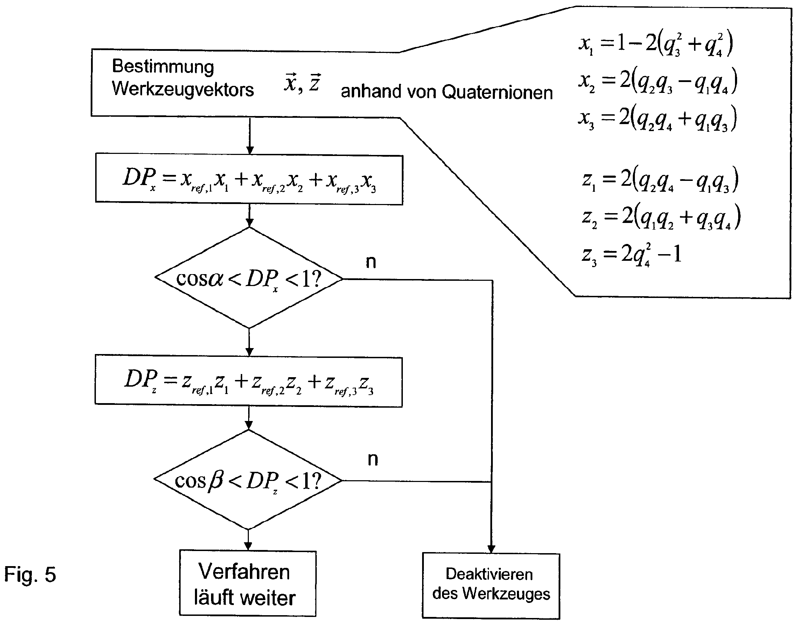

In Fig. 5 zeigt das Berechnungsschema von Fig. 4 wobei hier von einer Angabe der Werkzeugausrichtung beziehungsweise -lage in Quaternionen ausgegangen wird. Dementsprechend werden die Quaternionen zunächst in Einheitsvektoren konvertiert und dann, wie vorstehend erläutert (siehe Fig. 4), entsprechend weiterverarbeitet.

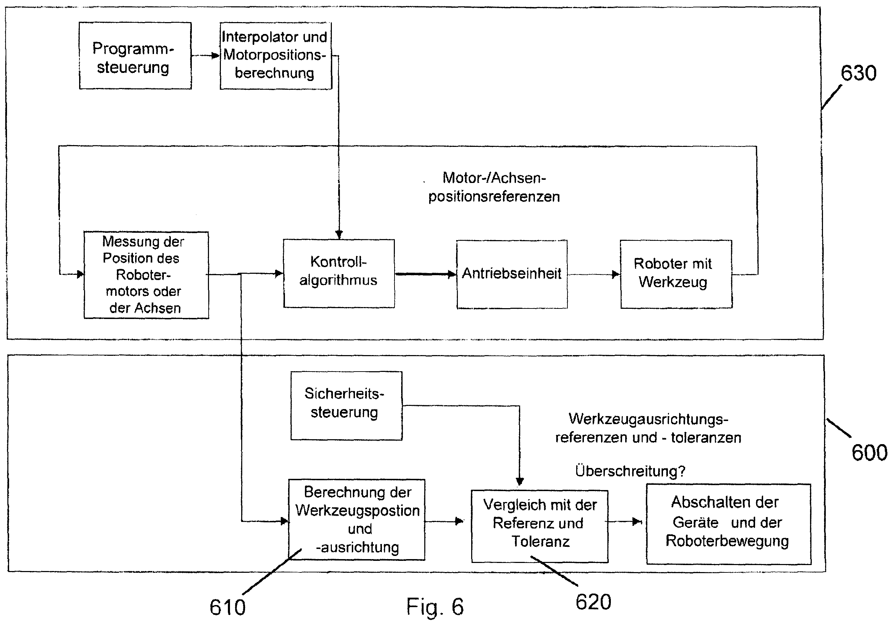

In Fig. 6 ist ein beispielhaftes System zur Ausrichtungs- und Lagekontrolle eines Roboterwerkzeugs, wobei eine Überwachungseinrichtung 600 mit Erfassungseinheit 610 und Verarbeitungseinheit 620 vorgesehen ist, die mit der Kontrolleinrichtung 630 des Roboters 200 zusammenwirkt und unter Berücksichtigung wenigstens einer vorgebbaren Referenzrichtung des Roboterwerkzeugs, sowie wenigstens eines vorgebbaren Toleranzwinkels, welcher einen kegelförmigen Toleranzbereich um die wenigstens eine Referenzrichtung des Roboterwerkzeuges 205 aufspannt, mittels der Erfassungseinheit 610 automatisiert die Ausrichtung des Roboterwerkzeuges ermittelt und die Verarbeitungseinheit 620 die ermittelte Ausrichtung mit der vorgebbaren Referenzrichtung und/oder mit den durch den kegelförmigen Toleranzbereich vorgegebenen Toleranzwerten vergleicht und/oder bei Verlassen des wenigstens einen Toleranzbereichs im Zusammenwirken mit der Kontrolleinrichtung 630 des Roboters 200 eine Abschaltung und/oder Deaktivierung des jeweiligen Roboterwerkzeugs 205 bewirkt. Weiterhin ist vorsehbar, dass die Verarbeitungseinheit 620 bei Verlassen des wenigstens einen Toleranzbereiches die Bewegung des Roboters 200 stoppt. Die Überwachungseinrichtung 600 führt die Ausrichtungs- und/oder Lagebestimmung des Roboterwerkzeugs 205 anhand von Messwerten bezüglich der Roboterachsen- und/oder Motorpositionen des Roboters 200 durch, wobei auch die Position des jeweiligen Roboterwerkzeugs 205 und/oder Hilfsmittels bestimmt werden kann. Die Überwachungseinrichtung 600 ist dafür eingerichtet eine Warnmeldung zu generieren und zu der Roboterkontrolleinrichtung 630 und/oder einem dafür vorgesehenen optischen und/oder akustischen Signalgeber, insbesondere eine Warnlampe, Signallampe, Sirene, Horn, oder Lautsprecher, zu übermitteln wenn die Lage und/oder Ausrichtung des Roboterwerkzeugs innerhalb des Toleranzbereiches um einen vorbestimmbaren Prozentanteil von der jeweiligen Referenzrichtung abweicht.

Auch sind wenigstens zwei Referenzrichtungen mit je einem Toleranzwinkel vorgebbar, wobei die Überwachungseinrichtung 630 die Abschaltung des jeweiligen Roboterwerkzeugs 205 bei Verlassen und/oder Überschreiten auch nur eines durch einen Toleranzwinkel aufgespannten Toleranzbereiches bewirkt.

Die Überwachungseinrichtung 600 ist dafür eingerichtet den Arbeitsbereich des Roboters 200 bei Bedarf und/oder vorgabenabhängig in wenigstens zwei Teilarbeitsbereiche mit jeweils wenigstens einer Referenzrichtung mit Toleranzwinkel untergliedert, wobei dann mehrere lokal verteilte, unterschiedliche Referenzrichtungen und/oder Toleranzwinkel berücksichtigt sind.

Die Geometrie, Größe, Lage und Anordnung der verschiedenen Teilarbeitsbereiche sind dabei frei wählbar. Überlappen zwei oder mehrere Teilarbeitsbereiche so sind im Überlappungsbereich alle gültigen Toleranzbereiche zu berücksichtigen und einzuhalten. Dies gilt sowohl für das System als auch das Verfahren.

Die Überwachungseinrichtung 630 selektiert automatisch die passenden oder geeigneten Referenzrichtungen und/oder Referenzen und/oder Toleranzen in Abhängigkeit der Position des Roboters 200 und/oder des Roboterwerkzeugs 205 in Relation zum jeweiligen Teilarbeitsbereich und damit ortsabhängig und/oder ortsaufgelöst .

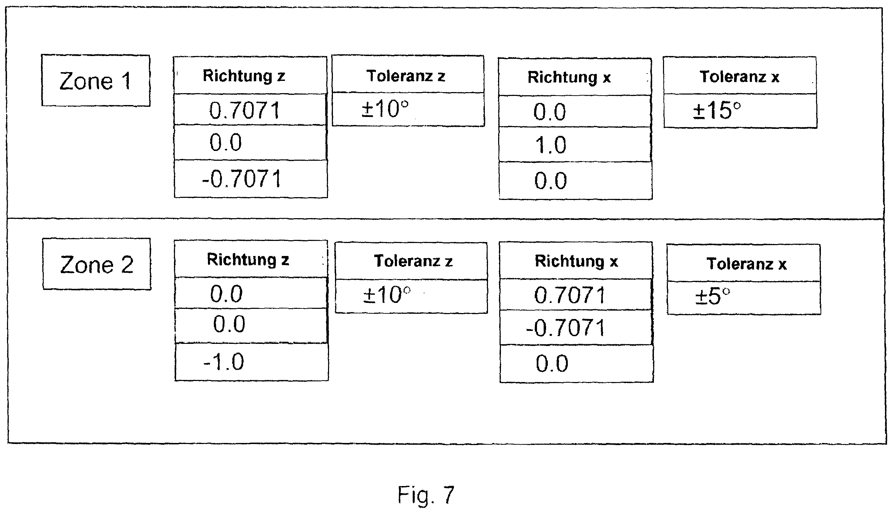

Des Weiteren kann eine Eingabevorrichtung mit entsprechenden Eingabemöglichkeiten, wie in Fig. 7 gezeigt, vorgesehen sein, um Referenz- und/oder Toleranzwerte und/oder Richtungen, auch für mehrere Teilarbeitsbereiche, zu erfassen und/oder zu ändern.

Die Überwachungseinrichtung ermittelt Ausrichtungsfehler und/oder-abweichungen des Roboterwerkzeugs in Bezug auf die jeweilige Referenzrichtung verfahrensgemäß, vorzugsweise durch Skalarproduktbildung und anschließenden Vergleich.

## Patentansprüche

1. Verfahren zur Ausrichtungs- und Lagekontrolle eines Roboterwerkzeugs, wobei unter Berücksichtigung wenigstens einer vorgebbaren Referenzrichtung des Roboterwerkzeugs, sowie wenigstens eines vorgebbaren Toleranzwinkels, welcher einen Toleranzbereich um die wenigstens eine Referenzrichtung des Roboterwerkzeuges aufspannt, mittels Messwerterfassung und -verarbeitung automatisiert die Ausrichtung des Roboterwerkzeuges ermittelt und mit der Referenzrichtung und/oder mit den durch den Toleranzbereich vorgegebenen Toleranzwerten verglichen und/oder bei Verlassen des wenigstens einen Toleranzbereichs eine Abschaltung und/oder Deaktivierung des jeweiligen Roboterwerkzeugs bewirkt wird, **dadurch gekennzeichnet, dass** wenigstens zwei Referenzrichtungen mit je einem Toleranzwinkel vorgeben sind, wobei die Abschaltung des Roboterwerkzeugs bei Verlassen und/oder Überschreiten auch nur eines durch einen Toleranzwinkel aufgespannten Toleranzbereiches bewirkt wird.

2. Verfahren nach Anspruch 1, **dadurch gekennzeichnet, dass** durch den wenigstens einen vorgebbaren Toleranzwinkel ein sich von einem vorbestimmten Ursprung aus aufweitender Toleranzbereich um die wenigstens eine Referenzrichtung des Roboterwerkzeugs aufgespannt wird.

3. Verfahren nach einem der Ansprüche 1 oder 2, **dadurch gekennzeichnet, dass** durch den wenigstens einen vorgebbaren Toleranzwinkel um die wenigstens eine Referenzrichtung des Roboterwerkzeuges wenigstens ein kegelförmiger Toleranzbereich aufgespannt wird.

4. Verfahren nach einem der vorherigen Ansprüche, **dadurch gekennzeichnet, dass** die Referenzrichtung des Roboterwerkzeuges entlang einer Koordinatenachse, eines vorbestimmbaren festen Bezugs- und/oder Referenzraums des Roboterarbeitsbereiches verläuft.

5. Verfahren nach Anspruch 4, **dadurch gekennzeichnet, dass** dem festen Referenzraum ein Eulersches Koordinatensystem oder ein auf RPY-Winkeln basierendes Koordinatensystem zugrunde gelegt wird.

6. Verfahren nach einem der vorherigen Ansprüche, **dadurch gekennzeichnet, dass** der Arbeitsbereich des Roboters in wenigstens zwei Teilarbeitsbereiche mit jeweils wenigstens einer Referenzrichtung mit Toleranzwinkel zu untergliedert wird, wobei dann mehrere lokal verteilte, unterschiedliche Referenzrichtungen und/oder Toleranzwinkel berücksichtigt werden.

7. Verfahren nach Anspruch 6, **dadurch gekennzeichnet, dass** verschieden erforderliche Werkzeugorientierungen und/oder -ausrichtungen und/oder -lagen den jeweiligen Teilarbeitsbereichen des Roboters zugeordnet werden.

8. Verfahren nach einem der Ansprüche 6 oder 7, **dadurch gekennzeichnet, dass** automatisiert die passenden oder geeigneten Referenzrichtungen und/oder Referenzen und/oder Toleranzen in Abhängigkeit der Position des Roboters und/oder des Roboterwerkzeugs in Relation zum jeweiligen Teilarbeitsbereich und damit ortsabhängig und/oder ortsaufgelöst selektiert werden.

9. System zur Ausrichtungs- und Lagekontrolle eines Roboterwerkzeugs, wobei eine Überwachungseinrichtung mit Erfassungseinheit und Verarbeitungseinheit vorgesehen ist, die mit der Kontrolleinrichtung des Roboters zusammenwirkt und unter Berücksichtigung wenigstens einer vorgebbaren Referenzrichtung des Roboterwerkzeugs, sowie wenigstens eines vorgebbaren Toleranzwinkels, welcher einen Toleranzbereich um die wenigstens eine Referenzrichtung des Roboterwerkzeuges aufspannt, mittels der Erfassungseinheit automatisiert die Ausrichtung des Roboterwerkzeuges ermittelt und die Verarbeitungseinheit die ermittelte Ausrichtung mit der vorgebbaren Referenzrichtung und/oder mit den durch den aufgespannten Toleranzbereich vorgegebenen Toleranzwerten vergleicht und/oder bei Verlassen des wenigstens einen Toleranzbereichs im zusammenwirken mit der Kontrolleinrichtung des Roboters eine Abschaltung und/oder Deaktivierung des jeweiligen Roboterwerkzeugs bewirkt, **dadurch gekennzeichnet, dass** wenigstens zwei Referenzeinrichtungen mit je einem Toleranzwinkel vorgeben sind wobei die Überwachungseinrichtung die Abschaltung des Roboterwerkzeugs bei Verlassen und/oder Überschreiten auch nur eines der durch einen Toleranzwinkel aufgespannten Toleranzbereichs bewirkt.

10. System nach Anspruch 9, **dadurch gekennzeichnet, dass** durch den wenigstens einen vorgebbaren Toleranzwinkel ein sich von einem vorbestimmten Ursprung aus aufweitender Toleranzbereich um die wenigstens eine Referenzrichtung des Roboterwerkzeugs aufgespannt ist, der insbesondere kegelförmig ausgebildet ist.

11. System nach einem der Ansprüche 9 oder 10, **dadurch gekennzeichnet, dass** durch den wenigstens einen vorgebbaren Toleranzwinkel wenigstens ein kegelförmiger Toleranzbereich um die wenigstens eine Referenzrichtung des Roboterwerkzeugs aufgespannt ist.

12. System nach einem der Ansprüche 9 bis 11, **dadurch gekennzeichnet, dass** die Referenzrichtung des Roboterwerkzeuges entlang einer Koordinatenachse, eines vorbestimmbaren festen Bezugs- und/oder Referenzraums des Roboterarbeitsbereiches verläuft.

13. System nach einem der Ansprüche 9 bis 12, **dadurch gekennzeichnet, dass** dem festen Referenzraum ein kartesisches Koordinatensystem zugrunde gelegt ist und/oder dieses Koordinatensystem einen 3-dim Vektorraum aufspannt.

14. System nach einem der Ansprüche 9 bis 13, **dadurch gekennzeichnet, dass** dem festen Referenzraum ein Eulersches Koordinatensystem oder ein auf RPY-Winkeln basierendes Koordinatensystem zugrunde gelegt ist.

15. System nach einem der Ansprüche 9 bis 14, **dadurch gekennzeichnet, dass** die Überwachungseinrichtung eine Warnmeldung generiert und zu der Roboterkontrolleinrichtung und/oder einem dafür vorgesehenen optischen und/oder akustischen Signalgeber, insbesondere eine Warnlampe, Signallampe, Sirene, Horn, oder Lautsprecher, übermittelt wenn die Lage und/oder Ausrichtung des Roboterwerkzeugs innerhalb des Toleranzbereiches um einen vorbestimmbaren Prozentanteil von der jeweiligen Referenzrichtung abweicht.

16. System nach einem der Ansprüche 9 bis 15, **dadurch gekennzeichnet, dass** die Überwachungseinrichtung den Arbeitsbereich des Roboters vorgabenabhängig in wenigstens zwei Teilarbeitsbereiche mit jeweils wenigstens einer Referenzrichtung mit Toleranzwinkel untergliedert, wobei dann mehrere lokal verteilte, unterschiedliche Referenzrichtungen und/oder Toleranzwinkel berücksichtigt sind.

17. System nach Anspruch 16, **dadurch gekennzeichnet, dass** verschieden erforderliche Werkzeugorientierungen und/oder -ausrichtungen und/oder -lagen den jeweiligen Teilarbeitsbereichen des Roboters zugeordnet sind.

18. System nach einem der Ansprüche 16 oder 17, **dadurch gekennzeichnet, dass** die Überwachungseinrichtung automatisiert die passenden oder geeigneten Referenzrichtungen und/oder Referenzen und/oder Toleranzen in Abhängigkeit der Position des Roboters und/oder des Roboterwerkzeugs in Relation zum jeweiligen Teilarbeitsbereich und damit ortsabhängig und/oder ortsaufgelöst selektiert.

19. System nach einem der vorherigen Ansprüche 9 bis 18, **dadurch gekennzeichnet, dass** die Überwachungseinrichtung Ausrichtungsfehler und/oder -abweichungen des Roboterwerkzeugs in Bezug auf die jeweilige Referenzrichtung ermittelt, indem sie jeweils das Skalarprodukt des jeweiligen Werkzeug-Vektors in Referenzkoordinaten mit dem Werkzeug-Referenzvektor in Referenzkoordinaten bildet und/oder mit dem Cosinus des halben Öffnungswinkels des der jeweiligen Referenzrichtung zugeordneten kegelförmigen Toleranzbereichs und/oder mit dem Cosinus des Winkels zwischen Referenzvektor und entsprechendem Toleranzvektor vergleicht.

## Claims

1. Method for alignment, position and orientation monitoring of a robot tool, wherein the alignment of the robot tool is determined, is compared with the reference direction and/or with tolerance values which are predetermined by the tolerance band, and/or the respective robot tool is disconnected and/or deactivated on leaving the at least one tolerance band, automatically by means of measured-value recording and processing and taking account of at least one predeterminable reference direction of the robot tool, and at least one predeterminable tolerance angle, which defines a tolerance band around the at least one reference direction of the robot tool, **char-**

**acterized in that** at least two reference directions are predetermined, each having a tolerance angle, with the robot tool being disconnected even on leaving and/or exceeding just one tolerance band which is defined by a tolerance angle.

2. Method according to Claim 1, **characterized in that** a tolerance band widening from a predetermined origin is defined around the at least one reference direction of the robot tool by the at least one predeterminable tolerance angle.

3. Method according to either of Claims 1 and 2, **characterized in that** at least one conical tolerance band is defined around the at least one reference direction of the robot tool by the at least one predeterminable tolerance angle.

4. Method according to one of the preceding claims, **characterized in that** the reference direction of the robot tool runs along a coordinate axis, of a predeterminable fixed reference space of the robot working area.

5. Method according to Claim 4, **characterized in that** the fixed reference space is based on a Eulerian coordinate system or a coordinate system based on RPY angles.

6. Method according to one of the preceding claims, **characterized in that** the working area of the robot is subdivided into at least two working area elements each having at least one reference direction with a tolerance angle, with a plurality of locally distributed, different reference directions and/or tolerance angles then being taken into account.

7. Method according to Claim 6, **characterized in that** various required tool orientations and/or alignments and/or positions are associated with the respective working area elements of the robot.

8. Method according to one of Claims 6 or 7, **characterized in that** the appropriate or suitable reference directions and/or references and/or tolerances are selected automatically as a function of the position of the robot and/or of the robot tool in relation to the respective working area element, and therefore as a function of the position and/or on a position-resolved basis.

9. System for alignment, position and orientation monitoring of a robot tool, with a monitoring device being provided which has a recording unit and a processing unit, interacts with the checking device of the robot and automatically determines the alignment of the robot tool by means of the recording unit, taking into account at least one predeterminable reference direction of the robot tool and at least one predeterminable tolerance angle which defines a tolerance band around the at least one reference direction of the robot tool and the processing unit compares the determined alignment with the predeterminable reference direction and/or with the tolerance values predetermined by the defined tolerance band, and/or, in conjunction with the checking device of the robot, disconnects and/or deactivates the respective robot tool on leaving the at least one tolerance band, **characterized in that** at least two reference directions are predetermined, each having a tolerance angle, with the robot tool being disconnected by the monitoring device even on leaving and/or exceeding just one tolerance band which is defined by a tolerance angle.

10. System according to Claim 9, **characterized in that** a tolerance band widening from a predetermined origin, in particular conically formed, is defined around the at least one reference direction of the robot tool by the at least one predeterminable tolerance angle.

11. System according to either of Claims 9 and 10, **characterized in that** at least one conical tolerance band is defined around the at least one reference direction of the robot tool by the at least one predeterminable tolerance angle.

12. System according to one of Claims 9 to 11, **characterized in that** the reference direction of the robot tool runs along a coordinate axis, of a predeterminable fixed reference space of the robot working area.

13. System according to one of Claims 9 to 12, **characterized in that** the fixed reference space is based on a Cartesian coordinate system and/or this coordinate system defines a three-dimensional vector space.

14. System according to one of Claims 9 to 13, **characterized in that** the fixed reference space is based on a Eulerian coordinate system or a coordinate system based on RPY angles.

15. System according to one of Claims 9 to 14, **characterized in that** the monitoring device generates a warning message and transmits this to the robot monitoring device and/or to an optical and/or acoustic signal transmitter which is provided for this purpose, in particular a warning lamp, signal lamp, siren, horn, or loudspeaker, if the position and orientation and/or alignment of the robot tool deviates by a predeterminable percentage component from the respective reference direction within the tolerance band.

**16.** System according to one of Claims 9 to 15, **characterized in that** the monitoring device subdivides the working area of the robot, depending on the requirement, into at least two working area elements each having at least one reference direction with a tolerance angle, with a plurality of locally distributed, different reference directions and/or tolerance angles then being taken into account.

**17.** System according to Claim 16, **characterized in that** various required tool orientations and/or alignments and/or positions are associated with the respective working area elements of the robot.

**18.** System according to one of Claims 16 or 17, **characterized in that** the monitoring device automatically selects the appropriate or suitable reference directions and/or references and/or tolerances as a function of the position of the robot and/or of the robot tool in relation to the respective working area element, and therefore as a function of the position and/or on a position-resolved basis.

**19.** System according to one of the preceding Claims 9 to 18, **characterized in that** the monitoring device determines alignment errors and/or discrepancies of the robot tool with respect to the respective reference direction by in each case forming the scalar product of the respective tool vector in reference coordinates multiplied by the tool reference vector in reference coordinates and/or by comparing it with the cosine of half the opening angle of the conical tolerance band associated with the respective reference direction, and/or the cosine of the angle between the reference vector and the corresponding tolerance vector.

**Revendications**

**1.** Procédé de contrôle de l'orientation et de la position d'un outil de robot, l'orientation de l'outil de robot étant déterminée automatiquement au moyen de l'acquisition et du traitement d'une valeur mesurée en tenant compte d'au moins une direction de référence pouvant être prédéfinie de l'outil de robot ainsi que d'au moins un angle de tolérance pouvant être prédéfini, lequel couvre une plage de tolérance autour de l'au moins une direction de référence de l'outil de robot, puis comparée à la direction de référence et/ou à des valeurs de tolérance prédéfinies par la plage de tolérance et/ou une mise hors circuit et/ou une désactivation de l'outil de robot respectif se produisant en cas de sortie de l'au moins une plage de tolérance, **caractérisé en ce qu'**au moins deux directions de référence ayant chacune un angle de tolérance sont prédéfinies, la mise hors circuit de l'outil de robot se produisant également en cas de sortie et/ou de dépassement d'une seule plage de tolérance couverte par un angle de tolérance.

**2.** Procédé selon la revendication 1, **caractérisé en ce que** l'au moins un angle de tolérance pouvant être prédéfini couvre une plage de tolérance autour de l'au moins une direction de référence de l'outil de robot qui s'élargit à partir d'une origine prédéterminée.

**3.** Procédé selon la revendication 1 ou 2, **caractérisé en ce que** l'au moins un angle de tolérance pouvant être prédéfini autour de l'au moins une direction de référence de l'outil de robot couvre au moins une plage de tolérance de forme conique.

**4.** Procédé selon l'une des revendications précédentes, **caractérisé en ce que** la direction de référence de l'outil de robot s'étend le long d'un axe de coordonnée d'un espace d'origine et/ou de référence fixe pouvant être prédéterminé de la zone de travail du robot.

**5.** Procédé selon la revendication 4, **caractérisé en ce que** l'espace de référence fixe s'appuie sur un système de coordonnées eulérien ou un système de coordonnées basé sur des angles RPY.

**6.** Procédé selon l'une des revendications précédentes, **caractérisé en ce que** la zone de travail du robot est subdivisée en au moins deux zones de travail partielles ayant respectivement au moins une direction de référence avec un angle de tolérance, plusieurs directions de référence et/ou angles de tolérance différents distribués localement étant alors pris en compte.

**7.** Procédé selon la revendication 6, **caractérisé en ce que** différent (e)s orientations et/ou alignements et/ou positions d'outil nécessaires sont associés aux zones de travail partielles respectives du robot.

**8.** Procédé selon l'une des revendications 6 ou 7, **caractérisé en ce que** les directions de référence et/ou les références et/ou les tolérances adaptées ou appropriées sont sélectionnées de manière automatisée en fonction de la position du robot et/ou de l'outil de robot en relation avec la zone de travail partielle respective et ainsi en fonction du lieu et/ou avec résolution du lieu.

**9.** Système de contrôle de l'orientation et de la position d'un outil de robot, un dispositif de surveillance pourvu d'une unité d'acquisition et d'une unité de traitement étant présent, lequel coopère avec le dispositif de contrôle du robot et détermine l'orientation de l'outil de robot automatiquement au moyen de l'unité d'acquisition en tenant compte d'au moins une direction de référence pouvant être prédéfinie de l'outil de robot ainsi que d'au moins un angle de tolérance pouvant être prédéfini, lequel couvre une plage de tolérance autour de l'au moins une direction de référence de l'outil de robot, et l'unité de traitement compare l'orientation déterminée à la direction de référence pouvant être prédéfinie et/ou aux valeurs de tolérance prédéfinies par la plage de tolérance couverte et/ou produit, en coopération avec le dispositif de contrôle du robot, une mise hors circuit et/ou une désactivation de l'outil de robot respectif en cas de sortie de l'au moins une plage de tolérance, **caractérisé en ce qu'**au moins deux directions de référence ayant chacune un angle de tolérance sont prédéfinies, le dispositif de surveillance produisant la mise hors circuit de l'outil de robot également en cas de sortie et/ou de dépassement d'une seule plage de tolérance couverte par un angle de tolérance.

10. Système selon la revendication 9, **caractérisé en ce que** l'au moins un angle de tolérance pouvant être prédéfini couvre une plage de tolérance autour de l'au moins une direction de référence de l'outil de robot qui s'élargit à partir d'une origine prédéterminée, laquelle est notamment de configuration conique.

11. Système selon l'une des revendications 9 ou 10, **caractérisé en ce que** l'au moins un angle de tolérance pouvant être prédéfini couvre au moins une plage de tolérance de forme conique autour de l'au moins une direction de référence de l'outil de robot.

12. Système selon l'une des revendications 9 à 11, **caractérisé en ce que** la direction de référence de l'outil de robot s'étend le long d'un axe de coordonnée d'un espace d'origine et/ou de référence fixe pouvant être prédéterminé de la zone de travail du robot.

13. Système selon l'une des revendications 9 à 12, **caractérisé en ce que** l'espace de référence fixe s'appuie sur un système de coordonnées cartésien et/ou ce système de coordonnées couvre un espace vectoriel tridimensionnel.

14. Système selon l'une des revendications 9 à 13, **caractérisé en ce que** l'espace de référence fixe s'appuie sur un système de coordonnées eulérien ou un système de coordonnées basé sur des angles RPY.

15. Système selon l'une des revendications 9 à 14, **caractérisé en ce que** le dispositif de surveillance génère un message d'alerte et le communique au dispositif de contrôle de robot et/ou à un transmetteur de signal visuel et/ou sonore prévu à cet effet, notamment une lampe d'avertissement, une lampe de signalisation, une sirène, un klaxon ou un haut-parleur lorsque la position et/ou l'orientation de l'outil de robot s'écarte de la direction de référence respective d'un pourcentage pouvant être prédéterminé à l'intérieur de la plage de tolérance.

16. Système selon l'une des revendications 9 à 15, **caractérisé en ce que** le dispositif de surveillance subdivise la zone de travail du robot en fonction d'indications en au moins deux zones de travail partielles ayant respectivement au moins une direction de référence avec un angle de tolérance, plusieurs directions de référence et/ou angles de tolérance différents distribués localement étant alors pris en compte.

17. Système selon la revendication 16, **caractérisé en ce que** différent(e)s orientations et/ou alignements et/ou positions d'outil nécessaires sont associés aux zones de travail partielles respectives du robot.

18. Système selon l'une des revendications 16 ou 17, **caractérisé en ce que** le dispositif de surveillance sélectionne de manière automatisée les directions de référence et/ou les références et/ou les tolérances adaptées ou appropriées en fonction de la position du robot et/ou de l'outil de robot en relation avec la zone de travail partielle respective et ainsi en fonction du lieu et/ou avec résolution du lieu.

19. Système selon l'une des revendications précédentes 9 à 18, **caractérisé en ce que** le dispositif de surveillance détermine les erreurs et/ou écarts d'orientation de l'outil de robot par rapport à la direction de référence respective en formant respectivement le produit scalaire du vecteur d'outil respectif dans les coordonnées de référence avec le vecteur de référence de l'outil dans les coordonnées de référence et/ou le compare avec le cosinus du demi angle d'ouverture de la plage de tolérance de forme conique associée à la direction de référence respective et/ou avec le cosinus de l'angle entre le vecteur de référence et le vecteur de tolérance correspondant.

EP 1 965 955 B1

Toleranzbereich nicht verlassen

Toleranzbereich verlassen

Fig. 1

220 Werkzeug x ref vektor $\vec{X}_{ref}$

Werkzeug x vektor $\vec{X}$

260   Werkzeug x Toleranzkegel $\alpha$

Werkzeug z vektor $\vec{Z}$

Werkzeug z ref vektor $\vec{Z}_{ref}$ 210

Werkzeug z Toleranzkegel $\beta$ 250

200

240

205

230

Weltkoordinatensystem

Fig. 2

EP 1 965 955 B1

Fig. 3

$$DP_x = x_{ref,1}x_1 + x_{ref,2}x_2 + x_{ref,3}x_3$$

$$\cos\alpha < DP_x < 1?$$

n

$$DP_z = z_{ref,1}z_1 + z_{ref,2}z_2 + z_{ref,3}z_3$$

$$\cos\beta < DP_z < 1?$$

n

Fig. 4

Verfahren
läuft weiter

Deaktivieren
des Werkzeuges

Fig. 5

Fig. 6

630
- Programm-steuerung
- Interpolator und Motorpositions-berechnung
- Motor-/Achsen-positionsreferenzen
- Kontroll-algorithmus
- Antriebseinheit
- Roboter mit Werkzeug
- Messung der Position des Roboter-motors oder der Achsen

600
- Werkzeugausrichtungs-referenzen und -toleranzen
- Sicherheits-steuerung
- Berechnung der Werkzeugspostion und -ausrichtung
- Vergleich mit der Referenz und Toleranz
- Überschreitung?
- Abschalten der Geräte und der Roboterbewegung

620

610

**Zone 1**

| Richtung z | Toleranz z | Richtung x | Toleranz x |
|---|---|---|---|
| 0.7071 | ±10° | 0.0 | ±15° |
| 0.0 | | 1.0 | |
| -0.7071 | | 0.0 | |

**Zone 2**

| Richtung z | Toleranz z | Richtung x | Toleranz x |
|---|---|---|---|
| 0.0 | ±10° | 0.7071 | ±5° |
| 0.0 | | -0.7071 | |
| -1.0 | | 0.0 | |

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5093552 A